# EUROPÄISCHE PATENTSCHRIFT

(11) **EP 2 281 418 B1**
(45) Veröffentlichungstag und Bekanntmachung des Hinweises auf die Patenterteilung: **29.08.2012**
(21) Anmeldenummer: 09736067.1
(22) Anmeldetag: 21.04.2009
(51) Int. Cl.: H05B 6/40

(54) **HÄRTEEINRICHTUNG**
TEMPERING DEVICE
DISPOSITIF DE TREMPE

(30) Priorität: 22.04.2008 DE 102008021306
(43) Veröffentlichungstag der Anmeldung: 09.02.2011
(73) Patentinhaber: Induschwel GmbH, 72280 Dornstetten (DE)
(72) Erfinder: SCHWENK, Wolfgang, 78337 Öhningen (DE); NACKE, Bernard, 31303 Burgdorf (DE); ULFERTS, Alexander, 29225 Celle (DE); HÄUSSLER, Andreas, 72250 Freudenstadt (DE); BIASUTTI, Fabio, I-33050 Ronchis (UD) (IT)
(74) Vertreter: Hoeger, Stellrecht & Partner Patentanwälte
(86) Internationale Anmeldenummer: PCT/EP2009/054740
(87) Internationale Veröffentlichungsnummer: WO 2009/130217

(56) Entgegenhaltungen:
- US-A- 4 855 551

## Beschreibung

Die Erfindung betrifft eine Härteeinrichtung für induktiv zu härtende Werkstücke, umfassend eine Werkstückaufnahme, in welche ein Werkstück einsetzbar ist, einen Induktor, durch welchen ein in einer Aufheizposition angeordnetes Werkstück mittels eines von einer Induktorspule erzeugten Magnetfeldes zumindest in einem Aufheizbereich aufheizbar ist, und eine Bewegungseinheit, mit welcher der Werkstückträger und der Induktor in einer Bewegungsrichtung relativ zueinander bewegbar sind, um das Werkstück in die Aufheizposition und aus dieser heraus zu bewegen.

Derartige Härteeinrichtungen sind aus dem Stand der Technik bekannt Ein Beispiel besteht aus dem Dokument US-4,855,551 Bei diesen ist allerdings die Aufheizung in dem Aufheizbereich nicht zufriedenstellend, insbesondere lässt sich der Aufheizbereich nicht exakt begrenzen.

Der Erfindung liegt daher die Aufgabe zugrunde, eine Härteeinrichtung der gattungsgemäßen Art derart zu verbessern, dass ausgehend von einer Oberfläche des Werkstücks ein Aufheizbereich mit möglichst definiertem Verlauf und definierter Ausdehnung erzielbar ist.

Diese Aufgabe wird bei einer Härteeinrichtung der eingangs beschriebenen Art erfindungsgemäß dadurch gelöst, dass in der Aufheizposition eine Feldführung umfassend zusammenwirkender Feldführungselemente vorgesehen ist, welche das von der Induktorspule erzeugte Magnetfeld zwischen jeweils gegenüberliegenden Seitenflächen des Aufheizbereichs zugewandten Felddurchtrittsflächen um die Induktorspule führt.

Der Vorteil der erfindungsgemäßen Lösung ist darin zu sehen, dass durch die den Seitenflächen des Aufheizbereichs des Werkstücks zugewandten Felddurchtrittsflächen ein im Wesentlichen homogener Verlauf des Magnetfeldes zwischen den Felddurchtrittsflächen im Bereich des in Aufheizposition stehenden erzielbar ist, wodurch die Ausdehnung des Aufheizbereichs in das Werkstück hinein mit dem gewünschten Verlauf und der gewünschten Ausdehnung erreichbar ist.

Die erfindungsgemäßen Feldführungselemente sind dabei aus einem magnetisierbaren Material, vorzugsweise aus Eisenpulverwerkstoff oder Ferrit hergestellt.

Um bei der Aufheizung des Aufheizbereichs die an diesen angrenzenden Feldführungselemente in möglichst geringem Maße aufzuheizen, ist vorzugsweise vorgesehen, dass zwischen den Felddurchtrittsflächen und den Seitenflächen des Aufheizbereichs ein Spalt vorgesehen ist.

Ein derartiger Spalt könnte mit einem thermisch isolierenden Medium ausgefüllt sein. Im einfachsten Fall ist der Spalt vorzugsweise als Luftspalt ausgebildet.

Zweckmäßigerweise hat ein derartiger Spalt eine Spaltbreite von weniger als 1 mm.

Noch vorteilhafter ist es, wenn der Spalt eine Spaltbreite von weniger als ungefähr 0,5 mm, noch besser weniger als ungefähr 0,3 mm, aufweist.

Um jedoch eine ausreichende thermische Entkopplung zwischen dem Feldführungselement und dem Aufheizbereich zu erreichen ist vorzugsweise vorgesehen, dass der Spalt eine Mindestbreite von ungefähr 0,1 mm aufweist.

Prinzipiell könnte die Spaltbreite in Richtung der Ausdehnung des Spalts quer zur Spaltbreite variieren. Besonders günstig ist es jedoch, wenn die Felddurchtrittsflächen der Form der Seitenflächen des Aufheizbereichs angepasst sind, so dass ein Spalt mit einer gleichmäßigen Spaltbreite vorliegt.

Ferner wurden hinsichtlich der Ausdehnung der Felddurchtrittsflächen und der Seitenflächen des Aufheizbereichs keine näheren Angaben gemacht.

So wäre es beispielsweise denkbar, dass sich die Felddurchtrittsflächen lediglich über einen Teilbereich des Aufheizbereichs erstrecken.

Um jedoch eine günstige Wirkung der Felddurchtrittsflächen zu erreichen, ist vorzugsweise vorgesehen, dass die Felddurchtrittsflächen die Seitenflächen des Aufheizbereichs im Wesentlichen übergreifen.

Noch besser ist es, wenn die Felddurchtrittsflächen sich über die Seitenflächen des Aufheizbereichs hinaus erstrecken.

Besonders vorteilhaft ist es, wenn die Felddurchtrittsflächen sich über mindestens 2 mm in Richtung einer Werkstückmitte über die Seitenflächen des Aufheizbereichs hinaus erstrecken.

Hinsichtlich der Ausbildung der Feldführung und der Anordnung der Feldführungselemente relativ zueinander ist vorzugsweise vorgesehen, dass die Feldführung das Magnetfeld der Induktorspule im Wesentlichen streufeldfrei führt, das heißt, dass die Feldführungselemente so angeordnet sind, dass im Wesentlich kein nennenswertes Streufeld entsteht.

Dies heißt, dass die Feldführungselemente der Feldführung das Magnetfeld weitgehend führen und bestenfalls Spalte zwischen den Feldführungselementen vorgesehen sind, die jedoch kein nennenswertes Streufeld entstehen lassen.

Zweckmäßigerweise ist hierzu vorgesehen, dass die Feldführungselemente einander zugewandte höchstens durch Spalte getrennte Feldübergangsflächen aufweisen.

Zweckmäßigerweise sind derartige Feldübergangsflächen relativ zueinander so angeordnet, dass der Spalt eine Breite von maximal ungefähr 2 mm, noch besser ungefähr 1 mm, aufweist.

Noch vorteilhafter ist es, wenn der Spalt eine Breite von weniger als ungefähr 0,8 mm aufweist.

Um jedoch Toleranzen ausgleichen zu können, ist vorzugsweise vorgesehen, dass ein derartiger Spalt eine Breite von mindestens ungefähr 0,5 mm aufweist.

Hinsichtlich der Form der Feldführung selbst wurden im Zusammenhang mit der bisherigen Beschreibung der einzelnen Ausführungsbeispiele keine näheren Angaben gemacht. So sieht eine vorteilhafte Lösung vor, dass die Feldführung mindestens einen die Induktorspule teilweise umgreifenden Feldführungskörper umfasst.

Insbesondere ist es günstig, wenn der Feldführungskörper so ausgebildet ist, dass er die Induktorspule an allen, nicht der zur härtenden Werkstückoberfläche zugewandten Seiten umgreift.

Ein derartiger Feldführungskörper ist beispielsweise so ausgebildet, dass dieser die Induktorspule ungefähr U-förmig umgreift.

Ferner ist vorzugsweise vorgesehen, dass die Feldführung Feldführungselemente umfasst, welche die Felddurchtrittsflächen aufweisen.

Von den die Felddurchtrittsflächen aufweisenden Feldführungselementen ist vorzugsweise mindestens eines an der Werkstückaufnahme angeordnet, so dass dieses mit dem Werkstück und durch die Bewegungseinrichtung bewegbar ist.

Hinsichtlich des an der Werkstückaufnahme angeordneten Feldführungselements ist vorzugsweise vorgesehen, dass dieses an dem Werkstück abgestützt ist, um damit zu erreichen, dass ein definierter Spalt zwischen der Felddurchtrittsfläche und der Seitenfläche des Aufheizbereichs vorliegt.

Ein derartiges Abstützen des Feldführungselements an dem Werkstück könnte beispielsweise über ein punktuelles Abstützen an einer Seitenfläche des Aufheizbereichs erfolgen.

Noch vorteilhafter ist es jedoch, wenn das Feldführungselement außerhalb der jeweiligen Seitenfläche des Aufheizbereichs an dem Werkstück abgestützt ist.

Eine konstruktiv besonders zweckmäßige Lösung sieht vor, dass an der Werkstückaufnahme zwei jeweils eine der Felddurchtrittsflächen aufweisende Werkstückseitige Feldführungselemente angeordnet sind und somit diese Feldführungselemente mit dem Werkstück und der Werkstückaufnahme in der Bewegungsrichtung bewegbar sind.

Um dabei eine optimale Ankopplung an mindestens ein weiteres Feldführungselement, das der Induktorspule zugeordnet ist, zu erreichen, ist vorzugsweise vorgesehen, dass die zwei werkstücksseitigen Feldführungselemente jeweils eine Feldübergangsfläche aufweisen, die einer Feldübergangsfläche eines induktorseitigen Feldführungselements zugewandt ist, das heißt, dass in diesem Fall die werkstückseitigen Feldführungselemente und die induktorseitigen Feldführungselemente getrennt voneinander angeordnet sind und zwischen diesen ein zwischen den Feldübergangsflächen liegender Luftspalt existiert.

Ferner ist zweckmäßigerweise vorgesehen, dass mindestens ein Feldführungselement der Feldführung stationär am Induktor angeordnet ist. Beispielsweise ist in diesem Fall mindestens ein Feldführungselement des Feldführungskörpers am Induktor angeordnet und führt das Magnetfeld zu dem mindestens einem dem Werkstück zugeordneten Feldführungselement.

Es ist auch denkbar, mindestens eines der eine Felddurchtrittsfläche aufweisenden Feldführungselemente fest mit dem Feldführungskörper oder mindestens einem Feldführungselement des Feldführungskörpers zu verbinden und lediglich das andere, eine Felddurchtrittsfläche aufweisende Feldführungselement an der Werkzeugaufnahme anzuordnen.

Insbesondere sieht eine Lösung vor, dass ein den Feldführungskörper bildendes Feldführungselement und das an diesen angrenzende eine Felddurchtrittsfläche tragende Feldführungselement eine einstückige Einheit bilden, die stationär an dem Induktor, insbesondere der Induktorspule, angeordnet ist, während das andere, den Feldführungskörper bildende Feldführungselement um das andere, die andere Felddurchtrittsfläche aufweisende Feldführungselement, ebenfalls eine einstückige Einheit bilden, die beispielsweise an der Werkstückaufnahme gehalten ist.

Die Relativbewegung von Induktor und Werkstückaufnahme führt somit bei diesem Ausführungsbeispiel auch zu der Relativbewegung der jeweils zu einem einstückigen Körper zusammengefassten Feldführungselemente.

Hinsichtlich der Kontur der Feldführungselemente wurden bislang keine näheren Angaben gemacht.

So ist bei einer Vielzahl von vorteilhaften Ausführungsformen vorgesehen, dass die Feldführungselemente insgesamt eine möglichst geschlossene Führung für das Magnetfeld der Induktorspule bilden.

Um jedoch eine Anpassung an die Kontur des Aufheizbereichs optimal vornehmen zu können, ist vorzugsweise vorgesehen, dass die an den Aufheizbereich angrenzenden Feldführungselemente in Richtung der Ausdehnung der Felddurchtrittsflächen eine Kontur aufweisen, welche einem Verlauf einer Kontur des Aufheizbereichs in Richtung der Ausdehnung der Seitenflächen angepasst ist.

Somit lässt sich der Verlauf der magnetischen Feldlinien im Aufheizbereich und somit die Ausdehnung des Aufheizbereichs möglichst präzise festlegen.

Hinsichtlich der Anordnung der Werkstückaufnahme relativ zum Induktor ist vorzugsweise vorgesehen, dass zum Ausgleich von Feldinhomogenitäten die Werkstückaufnahme und der Induktor relativ zueinander rotierend bewegbar sind.

Vorzugsweise ist dabei die Werkstückaufnahme an einer Drehvorrichtung gehalten, mit welcher das Werkstück in der Aufheizposition relativ zum Induktor rotierend antreibbar ist.

Weitere Merkmale und Vorteile der Erfindung sind Gegenstand der nachfolgeden Beschreibung sowie der zeichnerischen Darstellung einiger Ausführungsbeispiele.

In der Zeichnung zeigen:
- Figur 1: eine schematische Darstellung einer erfindungsgemäßen Härteeinrichtung;
- Figur 2: eine teilweise geschnittene perspektivische Darstellung eines Werkstücks in einer Aufheizposition relativ zum Induktor, allerdings mit unvollständiger Feldführung;
- Figur 3: eine perspektivische Darstellung ähnlich Figur 2 mit vollständiger Feldführung und allen Feldführungselementen;
- Figur 4: eine Ansicht der in Figur 3 dargestellten Schnittfläche in Richtung des Pfeils A in Figur 3;
- Figur 5: eine vergrößerte ausschnittsweise Darstellung des Schnitts gemäß Figur 4 in einem Bereich B in Figur 4;
- Figur 6: eine Darstellung der Ausdehnung eines Aufheizbereichs im Bereich einer Zahnspitze;
- Figur 7: eine Darstellung der Ausdehnung des Aufheizbereichs im Bereich eines Zahngrundes;
- Figur 8: einen Schnitt ähnlich Figur 4 durch ein zweites Ausführungsbeispiel einer erfindungsgemäßen Härteeinrichtung;
- Figur 9: einen Schnitt ähnlich Figur 4 durch ein drittes Ausführungsbeispiel einer erfindungsgemäßen Härteeinrichtung;
- Figur 10: einen Schnitt ähnlich Figur 4 durch ein viertes Ausführungsbeispiel einer erfindungsgemäßen Härteeinrichtung;
- Figur 11: eine perspektivische Darstellung ähnlich Figur 3 eines fünften Ausführungsbeispiels einer erfindungsgemäßen Härteeinrichtung;
- Figur 12: einen Schnitt ähnlich Figur 4 durch das fünfte Ausführungsbeispiel;
- Figur 13: eine perspektivische Darstellung ähnlich Figur 3 eines sechsten Ausführungsbeispiels einer erfindungsgemäßen Härteeinrichtung, und
- Figur 14: einen Schnitt ähnlich Figur 4 durch das sechste Ausführungsbeispiel.

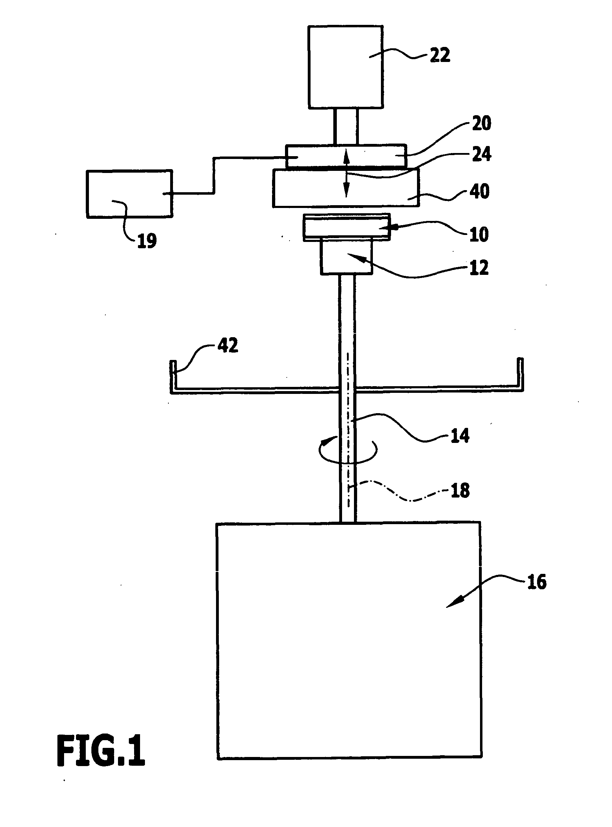

Ein erstes in Figur 1 dargestelltes Ausführungsbeispiel einer erfindungsgemäßen Härteeinrichtung für induktiv zu härtende Werkstücke 10 umfasst eine als Ganzes mit 12 bezeichnete Werkstückaufnahme, welche endseitig an einer Antriebswelle 14 angeordnet ist, die ihrerseits durch einen Rotationsantrieb 16 um eine Wellenachse 18 rotierend antreibbar ist, so dass mit der Werkstückaufnahme 12 auch das Werkstück 10 um die Wellenachse 18 rotierend antreibbar ist.

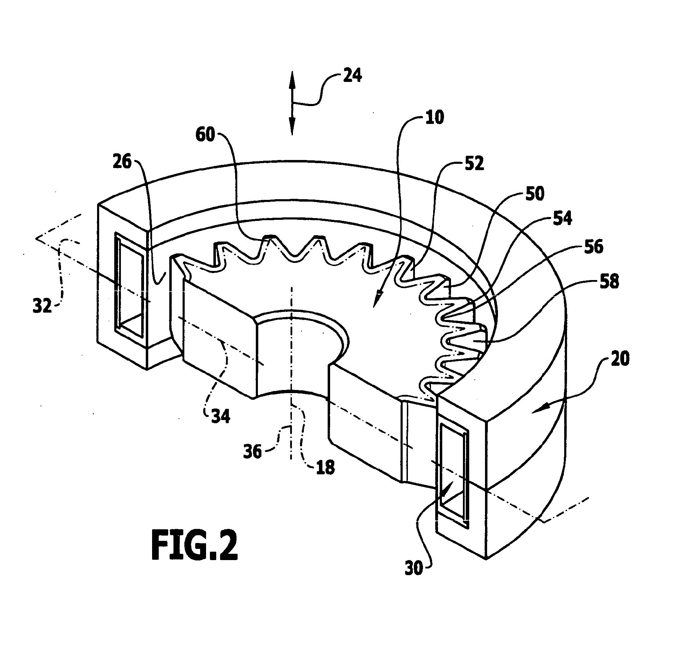

Ferner umfasst die Härteeinrichtung einen mit einem Induktionsgenerator 19 gekoppelten Induktor 20, welcher mit einer Bewegungseinrichtung 22, beispielsweise ausgebildet als Vorschubantrieb, umfassend einen Spindelantrieb oder einen Hydraulik- oder Pneumatikzylinder, gekoppelt ist und dadurch in einer Bewegungsrichtung 24, die vorzugsweise ungefähr parallel zur Wellenachse 18 verläuft, bewegbar ist, um das Werkstück 10, wie in Figur 2 dargestellt, in einem Innenraum 26 des Induktors 20 in der in Figur 2 dargestellten Aufheizposition zu positionieren, in welcher das Werkstück 10 von einer Induktorspule 30 des Induktors 20 umschlossen ist, die eine Spulenmittelebene 32 aufweist, welche im Wesentlichen senkrecht zur Wellenachse 18 und senkrecht zur Bewegungsrichtung 24 verläuft.

Ferner ist bei diesem Ausführungsbeispiel das Werkstück 10 in seiner in Figur 2 dargestellten Aufheizposition ebenfalls relativ zur Spulenmittelebene 32 im Wesentlichen symmetrisch angeordnet.

Im Fall eines in Figur 2 dargestellten Zahnrades 50 als Werkstück 10 fällt in der Aufheizposition eine Werkstückmittelebene 34 des Zahnrades mit der Spulenmittelebene 32 zusammen und weist eine Werkstückachse 36 auf.

Um das Werkstück 10 nach dem induktiven Aufheizen in der Aufheizposition innerhalb des Induktors 20 in einfacher Weise abschrecken zu können, ist -wie in Figur 1 dargestellt - gemeinsam mit dem Induktor 20 eine Abschreckeinrichtung 40 mittels der Bewegungseinrichtung 22 bewegbar, so dass nach Aufheizen des Werkstücks 10 im den Induktor 20 die Bewegungseinrichtung 22 den Induktor von der Werkstückaufnahme 12 weg bewegen kann, so dass sich das Werkstück 10 aus dem Innenraum 26 des Induktors 20 entfernt und in einen Wirkungsbereich der Abschreckeinrichtung 40 kommt, die beispielsweise als Brause für Abschreckmittel ausgebildet ist, und somit unmittelbar nach Verlassen der Aufheizposition das Werkstück 10 in einer Abschreckposition steht, in welcher die als Brause für Abschreckmittel ausgebildete Abschreckeinrichtung 40 das Abschreckmittel auf das aufgeheizte Werkstück 10 spritzt, um dieses abzuschrecken.

Beispielweise ist zum Aufsammeln des Abschreckmittels eine die Antriebswelle 14 umgebende Auffangwanne 42 vorgesehen.

Bei dem in Figur 2 dargestellten Werkstück 10, das als Zahnrad 50 ausgebildet ist, soll im Bereich der einzelnen Zähne 52 ein Härten sowohl im Bereich einer Zahnspitze 54 als auch im Bereich eines Zahngrundes 56 mit im Wesentlichen gleicher, von einer Oberfläche 58 denselben ausgehenden Einhärtetiefe erfolgen.

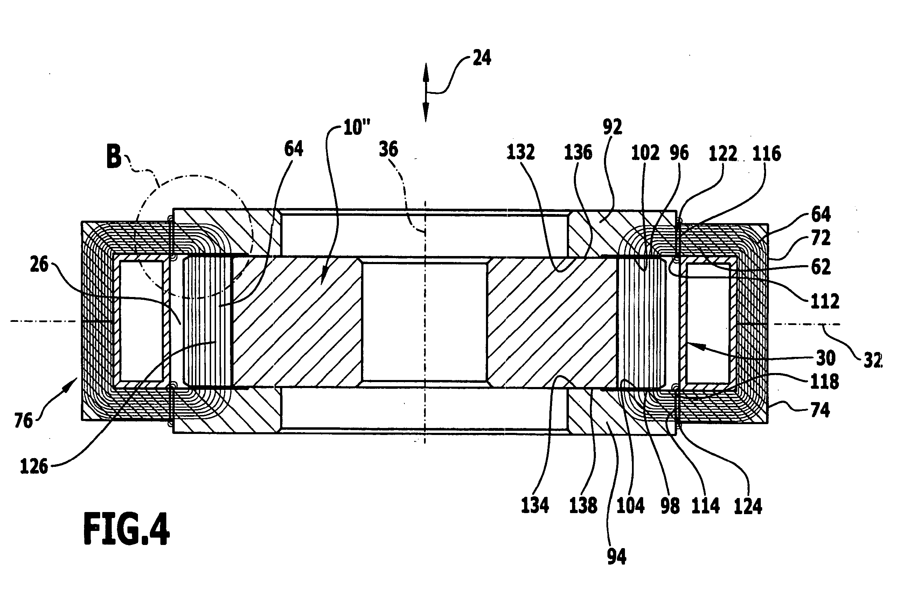

Hierzu ist es erforderlich, in einem sich an die Oberfläche 58 anschließenden Volumenbereich 60 der ausgehend von der Oberfläche 58 eine ungefähr konstante Eindringtiefe in das Material des Werkstücks 10 aufweist, das Material des Werkstücks 10 aufzuheizen, so dass der Volumenbereich 60 des Werkstücks 10 auch dem Aufheizbereich entspricht, in welchem die induktive Aufheizung des Werkstücks 10 durch Wirbelströme erfolgt, die von einem durch die Induktorspule 30 erzeugten Magnetfeld 62 induziert werden, des seinerseits Magnetfeldlinien 64 aufweist, die in senkrecht auf der Spulenmittelebene 32 stehenden Flächen um die Induktorspule 30 geschlossen umlaufen, wie in Figur 4 dargestellt.

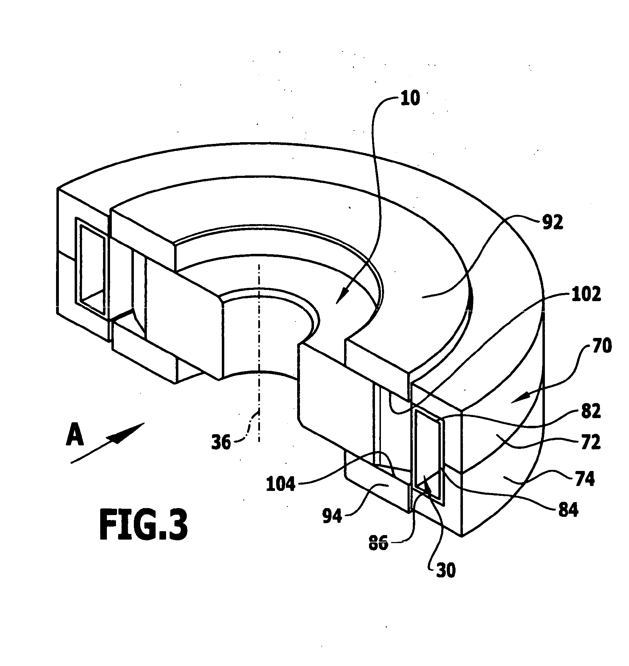

Zur Führung des Magnetfeldes 62 ist, wie in Figur 3 und 4 dargestellt, eine als Ganzes mit 70 bezeichnete Feldführung vorgesehen, welche beispielsweise zwei im Querschnitt L-förmig ausgebildete Flansche als Feldführungselemente 72 und 74 aufweist, die zusammen einen Feldführungskörper 76 bilden, welcher die Induktorspule 30 U-förmig umgreift und dabei an dem Werkstück 10 abgewandten Seiten 82, 84 und 86 der Induktorspule 30 anliegt.

Der Feldführungskörper 76 ist dabei vorzugsweise fest mit der Induktorspule 30 verbunden.

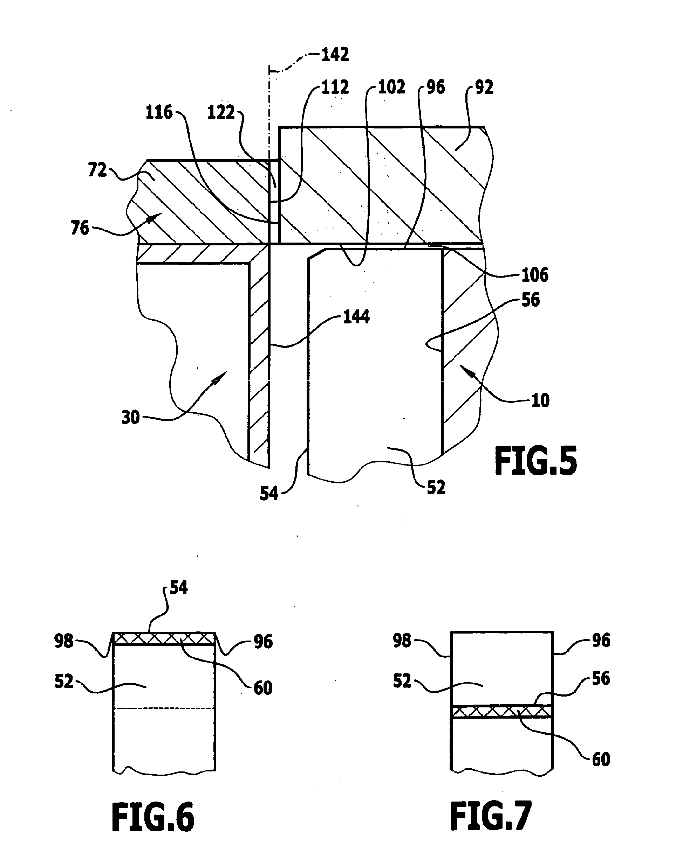

Ferner weist die Feldführung 70 noch ringförmig ausgebildete Feldführungselemente 92 und 94 auf, die einander gegenüberliegende Seitenflächen 96, 98 des Aufheizbereichs 60 übergreifen und sich vorzugsweise noch weiter über das Werkstück 10 hinweg in Richtung einer Werkstückmitte um die Werkstückachse 36 erstrecken. Die Feldführungselemente 92 und 94 weisen dabei, wie in Figur 4 und Figur 5 vergrößert dargestellt, Felddurchtrittsflächen 102, 104 auf, die den Seitenflächen 96, 98 des Aufheizbereichs 60 zugewandt sind, jedoch in einem Abstand von diesen verlaufen, der weniger als 1 mm, vorzugsweise weniger als 0,5 mm und noch besser weniger als 0,3 mm beträgt. Vorzugsweise beträgt dieser Abstand jedoch mindestens 0,1 mm, um einen Luftspalt 106 zwischen der jeweiligen Seitenfläche, in Figur 5 der Seitenfläche 96 und der entsprechenden Felddurchtrittsfläche, in Figur 5 der Felddurchtrittsfläche 102, zu erhalten.

Dieser Luftspalt 106 dient dazu, das jeweilige Feldführungselement 92, 94 thermisch gegenüber dem Aufheizbereich 60 zu entkoppeln, um eine Aufheizung der Feldführungselemente 92, 94 zu vermeiden.

Ferner erstreckt sich das jeweilige Feldführungselement 92, wie in Figur 4 dargestellt, über den Aufheizbereich 60, auch im Bereich des Zahngrundes 56, hinaus radial nach innen in Richtung zur Werkstückachse 36, und zwar mindestens 2 mm, vorzugsweise sogar mehr als 2 mm.

Um das Magnetfeld 62 unter Ausbildung eines möglichst geringen Streufeldes von dem Feldführungskörper 76 zu den Feldführungselementen 92, 94 zu führen, sind, wie in Figur 4 und 5 dargestellt, sowohl die Feldführungselemente 72, 74 mit Feldübergangsflächen 112, 114 versehen, die Feldübergangsflächen 116, 118 der Feldführungselemente 92, 94 zugewandt sind, wobei zwischen den jeweils einander zugewandt angeordneten Feldübergangsflächen 112 und 116 bzw. 114 und 118 jeweils ein Luftspalt 122, 124 ausgebildet ist, der eine Breite von weniger als ungefähr 1,5 mm aufweist und mindestens eine Breite von 0,5 mm hat.

Vorzugsweise liegt die Breite des Luftspalts 122, 124 zwischen 0,5 mm und 1,0 mm.

Mit den Feldführungselementen 72, 74 sowie 92 und 94 lässt sich somit das Magnetfeld 62 im Anschluss an das Werkstück 10 streufeldarm um die Induktorspule 30 herumführen und es lässt sich entlang des Aufheizbereichs 60 ein Magnetfeldveriauf 126 festlegen, bei weichem die Magnetfeldlinien 64 im Wesentlichen parallel zueinander und parallel zur Oberfläche 58 des Aufheizbereichs 60 verlaufen, um ausgehend von der Oberfläche 58 im Aufheizbereich 60 eine Aufheizung über eine im Wesentlichen konstante Tiefe im Werkstück 10 zu erreichen, wie dies am Beispiel von Figur 6 und 7 einerseits im Bereich der Zahnspitze 54 und andererseits im Bereich des Zahngrundes 56 dargestellt ist.

Um den in Figur 5 erkennbaren Luftspalt 106 zwischen den Seitenflächen 96 und 98 und den Felddurchtrittsflächen 102 und 104 exakt festlegen zu können, ist vorzugsweise, wie in Figur 4 dargestellt, vorgesehen, dass sich die Feldführungselemente 92 und 94 mit gegenüber den Felddurchtrittsflächen 102, 104 radial innenliegenden Stützflächen 132 und 134 an entsprechenden Oberflächenbereichen 136, 138 des Werkstücks 10 abstützen und beispielsweise gegen die Oberflächenbereiche 136, 138 kraftbeaufschlagt angelegt sind, um eine exakte Positionierung der Feldführungselemente 92 und 94 relativ zum Werkstück 10 zu gewährleisten.

Vorzugsweise liegen, wie in Figur 5 dargestellt, ferner die Feldübergangsflächen 112 und 114 in einer Fläche 142, welche mit einer Innenwand 144 der Induktorspule 30 näherungsweise fluchtet und die Feldübergangsflächen 116 und 118 liegen in einem durch die Luftspalte 122 und 124 definierten Abstand von der Fläche 142.

Damit ist die gesamte Einheit aus dem Werkstück 10 und den Feldführungselementen 92, 94 in der Bewegungsrichtung 24 relativ zu dem Induktor 20 mit der Induktorspule 30 mit dem Feldführungskörper 76 bewegbar, so dass das Werkstück 10 in den Innenraum 26 der Induktorspule 30 hinein oder aus diesem heraus bewegt werden kann, ohne dass die Feldführungselemente 92, 94 mit dem Feldführungskörper 76 oder der Induktorspule 30 kollidieren.

Ferner liegen in der in Figur 4 dargestellten Aufheizposition des Werkstücks 10 die Feldübergangsflächen 112 und 114 bzw. 116 und 118 relativ zueinander so, dass diese eine maximale Überdeckung aufweisen, um einen optimalen Übergang der Magnetfeldlinien 64 von dem Feldführungskörper 76 in die Feldführungselemente 92, 94 zu gewährleisten.

Ist somit in der Aufheizposition das Werkstück 10 auf die gewünschte Temperatur aufgeheizt, so lässt sich dieses durch eine geringe Bewegung in der Bewegungsrichtung 22 relativ zur Abschreckeinrichtung 40 so positionieren, dass das aufgeheizte Werkstück 10 durch das Abschreckmittel in einfacher Weise abgeschreckt werden kann, um das Werkstück 10 in dem Volumenbereich 60 zu härten.

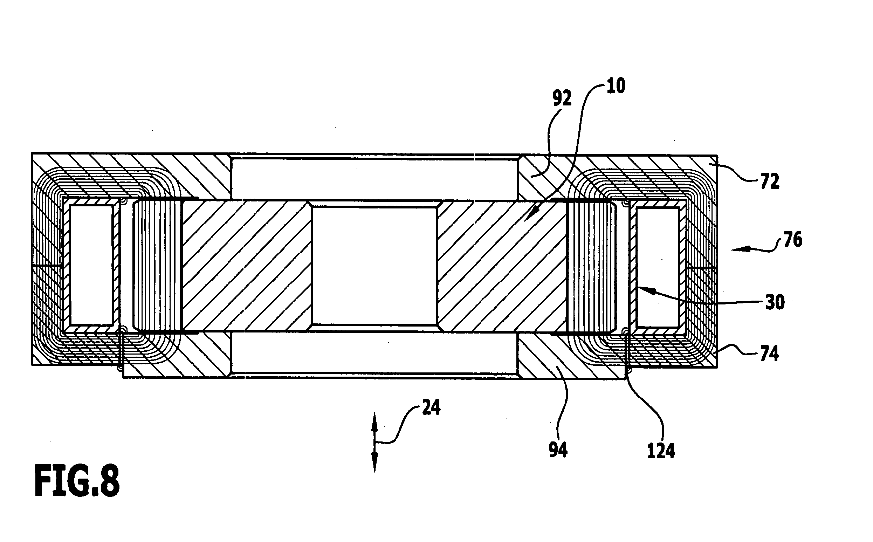

Bei einem zweiten Ausführungsbeispiel einer erfindungsgemäßen Härteeinrichtung, dargestellt in Figur 8, sind diejenigen Elemente, die mit denen des ersten Ausführungsbeispiels identisch sind, entweder nicht beschrieben oder mit demselben Bezugszeichen versehen, so dass diesbezüglich vollinhaltlich auf die Ausführungen zum ersten Ausführungsbeispiel Bezug genommen werden kann.

Im Gegensatz zum ersten Ausführungsbeispiel ist bei dem zweiten, in Figur 8 dargestellten Ausführungsbeispiel das Feldführungselement 92 einstückig mit dem Feldführungselement 72 des Feldführungskörpers 76 verbunden und somit relativ zur Induktorspule 30 stationär angeordnet, so dass diese eine Einheit bilden, wobei in diesem Fall auch das Feldführungselement 92 nicht mit einer Stützfläche 132 an einem Oberflächenbereich 136 abgestützt ist, sondern konstant in definiertem Abstand von dem Werkstück 10 positioniert bleibt, um das Werkstück 10 in der Werkstückaufnahme 12 rotierend antreiben zu können, während das Feldführungselement 92 in gleicher Weise wie der Feldführungskörper 76 drehfest relativ zur Induktorspule 30 stehen bleibt.

Bei diesem Ausführungsbeispiel ist somit nur noch das Feldführungselement 94 mit dem Werkstück 10 mitrotierend an der Werkstückaufnahme 12 angeordnet und wird mit dem Werkstück 10 in der Bewegungsrichtung 24 soweit bewegt, bis das Werkstück 10 in der Aufheizposition steht und die Feldübergangsflächen 114 und 118 relativ zueinander mit Überdeckung positioniert sind.

Diese Lösung hat den Vorteil, dass es nicht notwenig ist, zwischen dem Feldführungselement 92 und dem Feldführungselement 72 den Luftspalt 122 vorzusehen, so dass das durch den Luftspalt 122 bedingte Streufeld vermieden werden kann, allerdings ist eine genaue Höhenpositionierung des Induktors zum Werkstück erforderlich, um den geringen Luftspalt zwischen Feldführung und Werkstück zu erreichen.

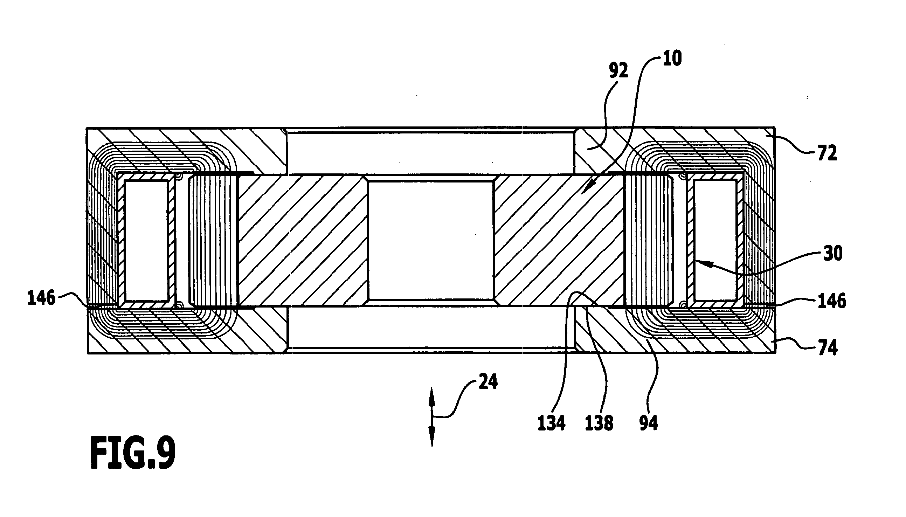

Bei einem dritten Ausführungsbeispiel einer erfindungsgemäßen Härteeinrichtung, dargestellt in Figur 9, sind ebenfalls diejenigen Elemente, die mit denen der voranstehenden Ausführungsbeispiele identisch sind, mit denselben Bezugszeichen versehen, so dass diesbezüglich vollinhaltlich auf die Ausführungen zum ersten und zweiten Ausführungsbeispiel verwiesen werden kann.

Im Gegensatz zum ersten Ausführungsbeispiel sind bei dem dritten Ausführungsbeispiel die Feldführungselemente 92 und 94 jeweils einstückig mit den Feldführungselementen 72 und 74 verbunden.

Soll bei diesem Ausführungsbeispiel das Werkstück 10 in der Bewegungsrichtung 24 bewegbar sein, so ist beispielsweise das Feldführungselement 94 mit der Stützfläche 134 an dem Oberflächenbereich 138 des Werkstücks 10 abgestützt und mit diesem mitrotierend an der Werkstückaufnahme 12 gehalten, wobei dies ebenfalls für das Feldführungselement 74 gilt, so dass die Feldführungselemente 94 und 74 mit dem Werkstück 10 mitrotierend ausgebildet sind. Folglich ist zwischen den Feldführungselementen 74 und 72 ein Luftspalt 146 vorgesehen, der es erlaubt, das Feldführungselement 74 relativ zum Feldführungselement 72, das stationär zur Induktorspule 30 angeordnet ist, rotieren zu lassen.

Somit kann die Einheit aus Werkstück 10 und den Feldführungselementen 94 und 74 in der Bewegungsrichtung 24 bewegt werden, um nach Aufheizen des Werkstücks 10 im Aufheizbereich 60 diesen möglichst schnell durch die Abschreckeinrichtung 40 abzuschrecken.

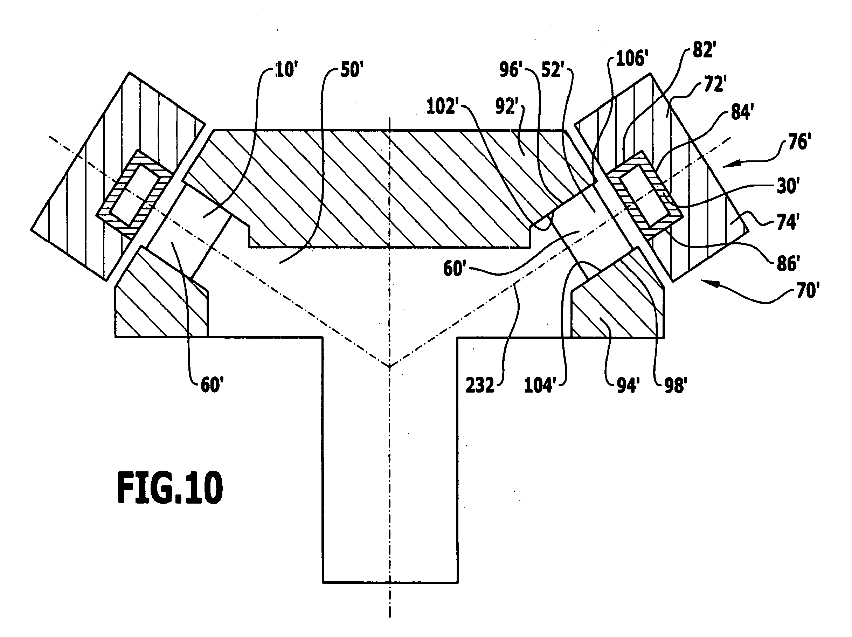

Bei einem vierten Ausführungsbeispiel einer erfindungsgemäßen Härteeinrichtung, dargestellt in Figur 10, ist das zu härtende Werkstück 10' nicht wie bei den voranstehenden Ausführungsbeispielen als Zahnrad 50 ausgebildet, sondern als Kegelrad 50', dessen Zähne 52' nicht symmetrisch zur Spulenmittelebene 32 angeordnet sind, sondern in der in Figur 10 dargestellten Aufheizposition jeweils symmetrisch zu einer Kegelmantelfläche 232 angeordnet sind.

Aus diesem Grund ist auch die Induktorspule 30' nicht so ausgebildet, dass sie eine Spulenmittelebene aufweist, sondern so, dass diese ebenfalls symmetrisch zur Kegelmantelfläche 232 angeordnet ist.

In gleicher Weise ist zur Führung des Magnetfeldes 62 mit den Magnetfeldlinien 64 eine als Ganzes mit 70 bezeichnete Feldführung vorgesehen, welche ähnlich dem ersten Ausführungsbeispiel zwei im Querschnitt L-förmig ausgebildete Flansche als Feldführungselemente 72' und 74' umfasst, die zusammen einen Feldführungskörper 76' bilden, welcher die Induktorspule 30' U-förmig umgreift und dabei an dem Werkstück 10' abgewandten Seiten 82', 84' und 86' anliegen, wobei die Seiten 82' und 86' beispielsweise parallel zur Kegelmantelfläche 232 verlaufen, während die Seite 84' quer, insbesondere senkrecht zur Kegelmantelfläche 232 ausgerichtet ist.

Ferner umfasst die Feldführung 70' noch ringförmig ausgebildete Feldführungselemente 92' und 94', die bei dem vierten Ausführungsbeispiel nicht mehr ringförmig ausgebildet sind, sondern so, dass beispielsweise das Feldführungselement 92' das Kegelzahnrad 50' stirnseitig im Wesentlichen übergreift, während das Feldführungselement 94' das Kegelzahnrad 50' auf seiner der Stirnseite abgewandten Seite im Bereich der Zähne 52' und in daran anschließenden Bereichen übergreift.

Auch bei dem vierten Ausführungsbeispiel sind die Feldführungselemente 92' und 94' an dem Werkstück 10' fixiert, wobei, wie in Figur 5 im Zusammenhang mit dem ersten Ausführungsbeispiel beschrieben, zwischen den Felddurchtrittsflächen 102' und 104', die den Seitenflächen 96' und 98' des Aufheizbereichs 60 zugewandt sind, ebenfalls ein Luftspalt 106' vorgesehen ist, während der die Feldführungselemente 92' und 94' außerhalb des Aufheizbereichs 60' an dem Werkstück 10' abgestützt sind.

Im Übrigen arbeitet das vierte Ausführungsbeispiel in gleicher Weise wie im Zusammenhang mit dem ersten Ausführungsbeispiel beschrieben, so dass hinsichtlich der eigentlichen Funktion vollinhaltlich auf die Ausführungen zum ersten Ausführungsbeispiel Bezug genommen werden kann.

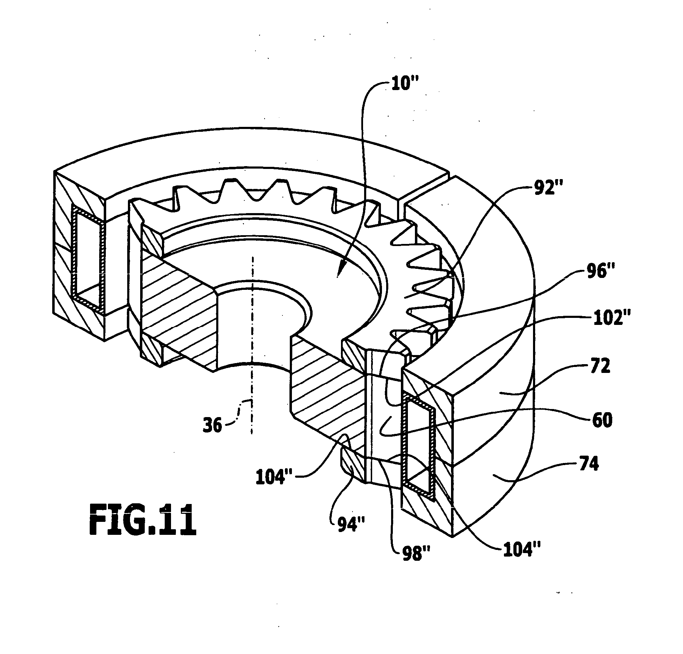

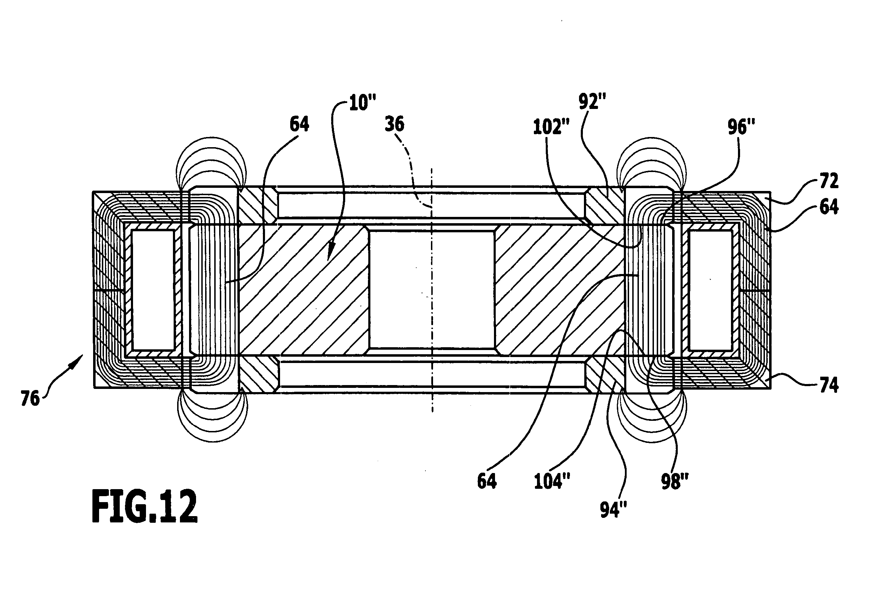

Bei einem fünften Ausführungsbeispiel, dargestellt in Figur 11 und 12, sind diejenigen Teile, die mit denen der voranstehenden Ausführungsbeispiele identisch sind, mit denselben Bezugszeichen versehen, so dass vollinhaltlich auf die Ausführungen zu den voranstehenden Ausführungsbeispielen, insbesondere das erste Ausführungsbeispiel, Bezug genommen werden kann.

Im Gegensatz zum ersten Ausführungsbeispiel ist bei dem fünften Ausführungsbeispiel vorgesehen, dass die Feldführungselemente 92" und 94" in Richtung der Ausdehnung der Felddurchtrittsflächen 102" und 104" eine Kontur aufweisen, welche einem Verlauf der Oberfläche 58 des Werkstücks 10 angepasst ist, so dass dann, wenn beispielsweise die Oberfläche 58 die eines Zahnrades ist, die Feldführungselemente 92", 94" eine Kontur aufweisen, die dem Verlauf der Kontur des Zahnrades in Richtung der Ausdehnung der Seitenflächen 96", 98" angepasst ist.

Damit besteht die Möglichkeit, den Verlauf der Magnetfeldlinien 64 in dem aufzuheizenden Volumenbereich 60 dessen Kontur anzupassen, insbesondere wenn der aufzuheizende Volumenbereich 60 unmittelbar an die Oberfläche 58 angrenzen soll.

Im Zusammenhang mit dem fünften Ausführungsbeispiel ist dies anhand eines Werkstücks 10 mit ungefähr parallel zur Werkstückachse 36 verlaufenden Zähnen 52 dargestellt.

Dabei wird bei derart an die Kontur des Aufheizbereichs angepassten Feldführungselementen 92", 94" insbesondere erreicht, dass die Magnetfeldlinien 64 im Werkstück 10 im Wesentlichen in dem aufzuheizenden Volumenbereich konzentriert werden.

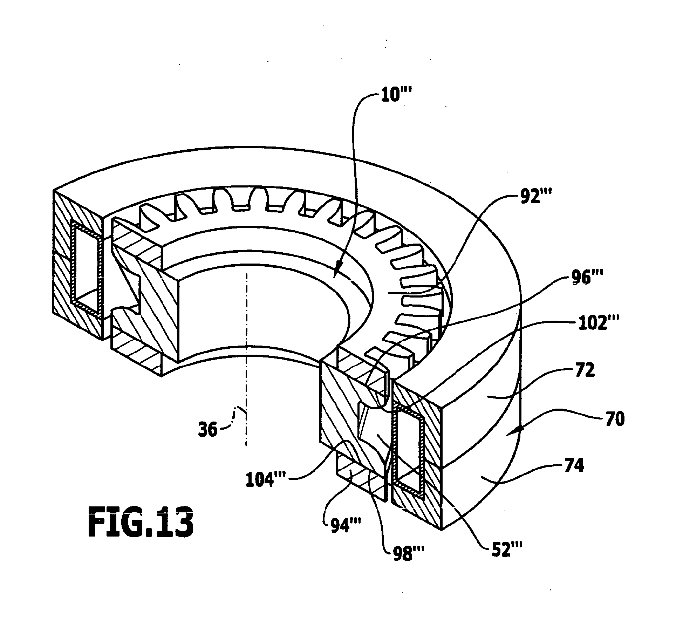

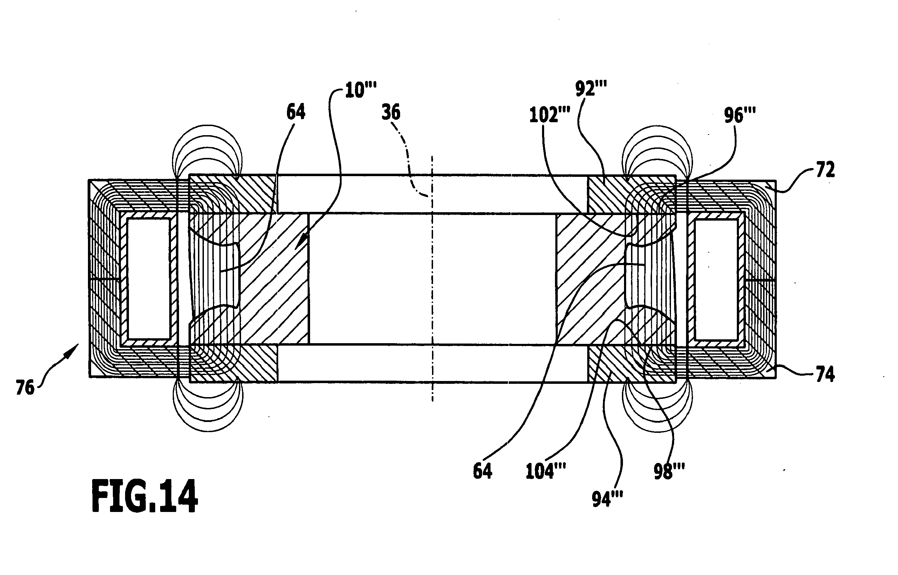

Bei einem sechsten Ausführungsbeispiel einer erfindungsgemäßen Härteeinrichtung, dargestellt in Figur 13 und Figur 14 ist das Werkstück 10'" beispielsweise ein Zahnrad mit schräg zur Werkstückachse 36 verlaufenden Zähnen 52"', wobei ebenfalls eine Anpassung der Kontur der Feldführungselemente 92'" und 94"' in Richtung der Ausdehnung der Felddurchtrittsflächen 102'" und 104'" dergestalt erfolgt, dass diese Kontur einem Verlauf der Kontur des aufzuheizenden Volumenbereichs 60 in Richtung der Ausdehnung der Seitenflächen 96"', 98"' angepasst ist.

Hinsichtlich der übrigen Elemente der sechsten Ausführungsbeispiels wird auf die Ausführungen zu den voranstehenden Ausführungsbeispielen, insbesondere zum ersten Ausführungsbeispiel, Bezug genommen, wobei die gleichen Teile mit denselben Bezugszeichen versehen sind.

## Patentansprüche

1. Härteeinrichtung für induktiv zu härtende Werkstücke, umfassend eine Werkstückaufnahme (12), in welche ein Werkstück (10) einsetzbar ist, einen Induktor (20), durch welchen ein in einer Aufheizposition angeordnetes Werkstück (10) mittels eines von einer Induktorspule (30) erzeugten Magnetfeldes (62) zumindest in einem Aufheizbereich (60) aufheizbar ist, und eine Bewegungseinrichtung (22), mit welcher die Werkstückaufnahme und der Induktor in einer Bewegungsrichtung (24) relativ zueinander bewegbar sind, um das Werkstück (10) in die Aufheizposition und aus dieser heraus zu bewegen,
**dadurch gekennzeichnet, dass** in der Aufheizposition eine Feldführung (70), umfassend zusammenwirkende Feldführungselemente (72, 74, 92, 94), vorgesehen ist, welche das von der Induktorspule (30) erzeugte Magnetfeld (62) zwischen jeweils gegenüberliegenden Seitenflächen (96, 98) des Aufheizbereichs (60) zugewandten Felddurchtrittsflächen (102, 104) um die Induktorspule (30) führt.

2. Härteeinrichtung nach Anspruch 1, **dadurch gekennzeichnet, dass** zwischen den Felddurchtrittsflächen (102, 104) und den Seitenflächen (96, 98) des Aufheizbereichs (60) ein Spalt (106) vorgesehen ist und dass insbesondere der Spalt (106) als Luftspalt ausgebildet ist.

3. Härteeinrichtung nach einem der voranstehenden Ansprüche, **dadurch gekennzeichnet, dass** die Felddurchtrittsflächen (102, 104) der Form der Seitenflächen (96, 98) des Aufheizbereichs (60) angepasst sind.

4. Härteeinrichtung nach einem der voranstehenden Ansprüche, **dadurch gekennzeichnet, dass** die Felddurchtrittsflächen (102, 104) die Seitenflächen (96, 98) des Aufheizbereichs (60) im Wesentlichen übergreifen.

5. Härteeinrichtung nach Anspruch 4, **dadurch gekennzeichnet, dass** die Felddurchtrittsflächen (102, 104) sich über die Seitenflächen (96, 98) des Aufheizbereichs (60) hinaus erstrecken.

6. Härteeinrichtung nach einem der voranstehenden Ansprüche, **dadurch gekennzeichnet, dass** die Feldführung (70) das Magnetfeld der Induktorspule (30) streufeldarm führt und dass insbesondere die Feldführungselemente (72, 74, 92, 94) einander zugewandte, höchstens durch Spalte (122, 124) getrennte Feldübergangsflächen (112, 114, 116, 118) aufweisen.

7. Härteeinrichtung nach einem der voranstehenden Ansprüche, **dadurch gekennzeichnet, dass** die Feldführung (70) mindestens einen die Induktorspule (30) teilweise umgreifenden Feldführungskörper (76) umfasst.

8. Härteeinrichtung nach Anspruch 7, **dadurch gekennzeichnet, dass** der Feldführungskörper (76) die Induktorspule (30) an allen nicht der zu härtenden Werkstückoberfläche zugewandten Seiten umgreift.

9. Härteeinrichtung nach einem der voranstehenden Ansprüche, **dadurch gekennzeichnet, dass** die Feldführung (70) Feldführungselemente (92, 94) umfasst, welche die Felddurchtrittsflächen (102, 104) aufweisen.

10. Härteeinrichtung nach Anspruch 9, **dadurch gekennzeichnet, dass** mindestens eines der Felddurchtrittsflächen (102, 104) aufweisenden Feldführungselemente (92, 94) an der Werkstückaufnahme (12) angeordnet ist, und dass insbesondere das an der Werkstückaufnahme (12) angeordnete Feldführungselement (92, 94) an dem Werkstück (10) abgestützt ist.

11. Härteeinrichtung nach Anspruch 10, **dadurch gekennzeichnet, dass** das Feldführungselement (92, 94) außerhalb der jeweiligen Seitenfläche (96, 98) des Aufheizbereichs (60) an dem Werkstück (10) abgestützt ist.

12. Härteeinrichtung nach einem der voranstehenden Ansprüche, **dadurch gekennzeichnet, dass** mindestens ein Feldführungselement (72, 74) der Feldführung (70) stationär am Induktor (20) angeordnet ist.

13. Härteeinrichtung nach Anspruch 12, **dadurch gekennzeichnet, dass** mindestens ein Feldführungselement (72) des Feldführungskörpers (76) am Induktor (20) angeordnet ist.

14. Härteeinrichtung nach einem der voranstehenden Ansprüche, **dadurch gekennzeichnet, dass** mindestens eines der die Felddurchtrittsfläche (102, 104) aufweisenden Feldführungselemente (96, 98) fest mit mindestens einem Feldführungselement (72, 74) des Feldführungskörpers verbunden ist.

15. Härteeinrichtung nach einem der voranstehenden Ansprüche, **dadurch gekennzeichnet, dass** die an den Aufheizbereich (60) angrenzenden Feldführungselemente (92", 94"; 92"', 94"') in Richtung der Ausdehnung der Felddurchtrittsflächen (102", 104"; 102"', 104"') eine Kontur aufweisen, welche einem Verlauf einer Kontur des Aufheizbereichs (60) in Richtung der Ausdehnung der Seitenflächen (96", 98"; 96"', 98"') angepasst ist.

## Claims

1. Hardening device for workpieces to be inductively hardened, comprising a workpiece seating (12), into which a workpiece (10) is insertable, an inductor (20), by means of which a workpiece (10) arranged in a heating position is heatable at least in a heating region (60) by means of magnetic field (62) generated by an inductor coil (30), and a movement device (22), with which the workpiece seating and the inductor are movable relative to one another in a movement direction (24) in order to move the workpiece (10) into and out of the heating position,
**characterised in that** a field guide (70) is provided in the heating position, which comprises cooperating field guide elements (72, 74, 92, 94) and guides the magnetic field (62) produced by the inductor coil (30) between field passage surfaces (102, 104) facing respective opposite side surfaces (96, 98) of the heating region (60) around the inductor coil (30).

2. Hardening device according to claim 1, **characterised in that** a gap (106) is provided between the field passage surfaces (102, 104) and the side surfaces (96, 98) of the heating region (60) and that in particular the gap (106) is formed as an air gap.

3. Hardening device according to one of the preceding claims, **characterised in that** the field passage surfaces (102, 104) are adapted to the shape of the side surfaces (96, 98) of the heating region (60).

4. Hardening device according to one of the preceding claims, **characterised in that** the field passage surfaces (102, 104) substantially overlap the side surfaces (96, 98) of the heating region (60).

5. Hardening device according to claim 4, **characterised in that** the field passage surfaces (102, 104) extend beyond the side surfaces (96, 98) of the heating region (60).

6. Hardening device according to one of the preceding claims, **characterised in that** the field guide (70) guides the magnetic field of the inductor coil (30) with low stray field and that in particular the field guide elements (72, 74, 92, 94) have field transition surfaces (112, 114, 116, 118) facing one another and at most separated by gaps (122, 124).

7. Hardening device according to one of the preceding claims, **characterised in that** the field guide (70) comprises at least one field guide body (76) partially engaging around the inductor coil (30).

8. Hardening device according to claim 7, **characterised in that** the field guide body (76) engages around the inductor coil (30) on all sides not facing the workpiece surface to be hardened.

9. Hardening device according to one of the preceding claims, **characterised in that** the field guide (70) comprises field guide elements (92, 94) having the field passage surfaces (102, 104).

10. Hardening device according to claim 9, **characterised in that** at least one of the field guide elements (92, 94) having the field passage surfaces (102, 104) is arranged on the workpiece seating (12), and that in particular the field guide element (92, 94) arranged on the workpiece seating (12) is supported on the workpiece (10).

11. Hardening device according to claim 10, **characterised in that** the field guide element (92, 94) is supported on the workpiece (10) outside the respective side surface (96, 98) of the heating region (60).

12. Hardening device according to one of the preceding claims, **characterised in that** at least one field guide element (72, 74) of the field guide (70) is arranged to be stationary on the inductor (20).

13. Hardening device according to claim 12, **characterised in that** at least one field guide element (72) of the field guide body (76) is arranged on the inductor (20).

14. Hardening device according to one of the preceding claims, **characterised in that** at least one of the field guide elements (96, 98) having the field passage surface (102, 104) is fixedly connected to at least one field guide element (72, 74) of the field guide body.

15. Hardening device according to one of the preceding claims, **characterised in that** in the direction of the extent of the field passage surfaces (102", 104"; 102"', 104"') the field guide elements (92", 94"; 92"', 94"') adjoining the heating region (60) have a contour, which is adapted to a course of a contour of the heating region (60) in the direction of the extent of the side surfaces (96", 98"; 96"', 98"').

## Revendications

1. Dispositif de trempe destiné à des pièces à usiner à durcir par induction, comportant un logement de pièce à usiner (12) dans lequel une pièce à usiner (10) peut être insérée, une bobine d'induction (20) par laquelle une pièce à usiner (10) disposée dans une position de chauffage peut être chauffée dans au moins une zone de chauffage (60) au moyen d'un champ magnétique (62) généré par une bobine d'induction (30), et comportant un dispositif de déplacement (22), lequel permet de déplacer l'un par rapport à l'autre le logement de pièce à usiner et la bobine d'induction dans une direction de déplacement (24), afin d'amener la pièce à usiner (10) dans la position de chauffage et de l'en faire sortir,
**caractérisé en ce qu'**est prévu dans la position de chauffage, un guide de champ (70) comportant des éléments de guide de champ (72, 74, 92, 94) qui coopèrent ensemble, lequel guide de champ conduit le champ magnétique (62) généré par la bobine d'induction (30) entre des surfaces de traversée de champ (102, 104) respectivement tournées vers des surfaces latérales (96, 98) opposées de la zone de chauffage (60), autour de la bobine d'induction (30).

2. Dispositif de trempe selon la revendication 1, **caractérisé en ce qu'**une fente (106) est prévue entre les surfaces de traversée de champ (102, 104) et les surfaces latérales (96, 98) de la zone de chauffage (60), et **en ce que** la fente (106) en particulier est réalisée comme un entrefer.

3. Dispositif de trempe selon l'une quelconque des revendications précédentes, **caractérisé en ce que** les surfaces de traversée de champ (102, 104) sont adaptées à la forme des surfaces latérales (96, 98) de la zone de chauffage (60).

4. Dispositif de trempe selon l'une quelconque des revendications précédentes, **caractérisé en ce que** les surfaces de traversée de champ (102, 104) entourent essentiellement les surfaces latérales (96, 98) de la zone de chauffage (60).

5. Dispositif de trempe selon la revendication 4, **caractérisé en ce que** les surfaces de traversée de champ (102, 104) s'étendent au-delà des surfaces latérales (96, 98) de la zone de chauffage (60).

6. Dispositif de trempe selon l'une quelconque des revendications précédentes, **caractérisé en ce que** le guide de champ (70) conduit quasiment sans champ de fuite le champ magnétique de la bobine d'induction (30), et **en ce que** les éléments de guide de champ en particulier (72, 74, 92 94) présentent des surfaces de transfert de champ (112, 114, 116, 118) tournées les unes vers les autres, séparées au maximum par des fentes (122, 124).

7. Dispositif de trempe selon l'une quelconque des revendications précédentes, **caractérisé en ce que** le guide de champ (70) comporte au moins un corps de guide de champ (76) entourant partiellement la bobine d'induction (30).

8. Dispositif de trempe selon la revendication 7, **caractérisé en ce que** le corps de guide de champ (76) entoure la bobine d'induction (30) au niveau de l'ensemble des côtés qui ne sont pas tournés vers la surface de la pièce à usiner à durcir.

9. Dispositif de trempe selon l'une quelconque des revendications précédentes, **caractérisé en ce que** le guide de champ (70) comporte des éléments de guide de champ (92, 94), qui présentent les surfaces de traversée de champ (102, 104).

10. Dispositif de trempe selon la revendication 9, **caractérisé en ce qu'**au moins un des éléments de guide de champ (92, 94) présentant des surfaces de traversée de champ (102, 104) est disposé sur le logement de pièce à usiner (12), et **en ce que** l'élément de guide de champ (92, 94) en particulier disposé sur le logement de pièce à usiner (12) s'appuie sur la pièce à usiner (10).

11. Dispositif de trempe selon la revendication 10, **caractérisé en ce que** l'élément de guide de champ (92, 94) s'appuie sur la pièce à usiner (10) à l'extérieur de la surface latérale (96, 98) respective de la zone de chauffage (60).

12. Dispositif de trempe selon l'une quelconque des revendications précédentes, **caractérisé en ce qu'**au moins un élément de guide de champ (72, 74) du guide de champ (70) est disposé de manière stationnaire sur la bobine d'induction (20).

13. Dispositif de trempe selon la revendication 12, **caractérisé en ce qu'**au moins un élément de guide de champ (72) du corps de guide de champ (76) est disposé sur la bobine d'induction (20).

14. Dispositif de trempe selon l'une quelconque des revendications précédentes, **caractérisé en ce qu'**au moins un des éléments de guide de champ (96, 98) présentant la surface de traversée de champ (102, 104) est relié de manière solide à au moins un élément de guide de champ (72, 74) du corps de guide de champ.

15. Dispositif de trempe selon l'une quelconque des revendications précédentes, **caractérisé en ce que** les éléments de guide de champ (92", 94" ; 92"', 94"') adjacents à la zone de chauffage (60) présentent en direction de l'extension des surfaces de traversée de champ (102", 104" ; 102"', 104"') un contour, qui est adapté à l'allure d'un contour de la zone de chauffage (60) en direction de l'extension des surfaces latérales (96", 98" ; 96"', 98"').
